Europäisches Patentamt

European Patent Office

Office européen des brevets

(11) Publication number: **0 180 187**
**B1**

(12) **EUROPEAN PATENT SPECIFICATION**

(45) Date of publication of patent specification: **06.02.91**

(51) Int. Cl.⁵: **G 21 C 11/00, G 21 C 11/06**

(21) Application number: **85113717.4**

(22) Date of filing: **29.10.85**

(54) Nuclear reactor with irradiation shields for pressure vessel welds.

(30) Priority: **31.10.84 US 666697**

(43) Date of publication of application:
**07.05.86 Bulletin 86/19**

(45) Publication of the grant of the patent:
**06.02.91 Bulletin 91/06**

(84) Designated Contracting States:
**BE DE FR GB IT SE**

(56) References cited:
**EP-A-0 094 255**
**EP-A-0 114 659**
**DE-A-2 629 737**
**DE-A-3 339 294**
**FR-A-2 354 612**
**US-A-3 868 302**

(73) Proprietor: **WESTINGHOUSE ELECTRIC CORPORATION**
**Westinghouse Building Gateway Center**
**Pittsburgh Pennsylvania 15222 (US)**

(72) Inventor: **Boyd, William Artis**
**1041 Greentree Road**
**Pittsburgh Pennsylvania 15220 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

Courier Press, Leamington Spa, England.

## Description

This invention relates in general to the field of power-producing nuclear reactors and in particular, to an arrangement for reducing the exposure of pressure vessel welds to fast-neutron flux.

As well known in the art, the core of a nuclear reactor, such as a pressurized light water reactor, contains nuclear fuel in the form of fissile material, such as uranium 235, which undergoes sustained fission reactions and, in so doing, generates heat. Mechanical components, known as reactor internals, structurally support the core within a hermetically sealed pressure vessel, and they direct a cooling medium, such as light water, into the pressure vessel, through the nuclear core, and out of the pressure vessel. The cooling medium, or reactor coolant, removes the heat generated by the fissioning of the nuclear fuel and transfers it to another cooling medium within heat exchangers which are typically located outside the pressure vessel. The second cooling medium, which usually is water, is converted into steam to be used to drive steam turbine electrical generator combinations.

The nuclear core usually comprises a plurality of fuel assemblies arranged side-by-side in an array having a peripheral outline which approximates that of a right circular cylinder. Each of the fuel assemblies comprises a multiplicity of fuel rods and control-rod guide tubes or thimbles laterally supported by grids in parallel spaced relationship with respect to each other, the guide tubes being adapted to receive control rods axially movable therein to control the reactivity of the nuclear core.

The reactor internals typically include a hollow cylindrical core barrel which is interposed between the nuclear core and the cylindrical wall of the pressure vessel. The reactor coolant enters the pressure vessel through one or more inlet nozzles, flows downward between the pressure vessel and the core barrel, turns 180°, flows upward through the core and through the space between the core and the core barrel, turns 90°, and then exits the pressure vessel through one or more exit nozzles.

As well known in the art, fissioning of nuclear fuel results from the capture of a neutron by the nucleus of the atoms of the nuclear fuel, and each neutron producing a fission causes heat and the production of more than one other neutron (on the average 2.1 neutrons are released per capture). In order for the nuclear chain reaction to be sustained, at least one of the newly produced neutrons must fission another atom of fuel. Since the newly produced neutrons are fast neutrons whereas fissioning requires slow neutrons, a neutron moderator is used to slow down or thermalize the fast neutrons. Light water used as a reactor coolant is an excellent moderator of neutrons. Not all of the excess neutrons produced through fissioning of an atom are utilized for fissioning other atoms, some of them being absorbed by the reactor internals, and others by nuclear poison, such as boron, dissolved in the primary coolant, by regular control rods containing non-burnable poisons, by special control rods containing burnable poisons and by poisons which build up within the nuclear fuel as a result of the fission process itself. In short, some excess neutrons are purposefully absorbed whereas others are absorbed inadvertently.

It is known to extend the life of a nuclear core, and thus to minimize time-consuming reactor shutdowns for refuelling purposes, by utilizing fuel assemblies provided with enriched nuclear fuel, usually enriched uranium 235.

However, enriched uranium is very expensive wherefore it is desirable to reduce as much as possible the amount of enrichment needed to extend the useful life of a core by a certain length of time. Techniques developed to accomplish this are known as fuel management techniques, the principal objective of which is to make more efficient use of the neutrons produced during fissioning. A known fuel management technique called the out-in-in fuel technique involves a three-phase core loading plan which provides for the core to be divided into three regions receiving respectively new, once-burned, and twice-burned fuel, and, after a certain period of reactor operation, provides for the most-burned fuel to be removed and replaced with the now twice-burned fuel, for the latter to be replaced with the now once-burned fuel, and for the latter to be replaced with new fuel.

Another known fuel management technique involves the use of a low-leakage loading pattern which, although more complicated than the out-in-in pattern, significantly improves the neutron economy by minimizing the leakage of fast neutrons from the core or, in other words, by maximizing the number of fast neutrons available, when moderated, for fissioning. It has been found that, as an adjunct to lowering fuel cycle costs through increased neutron economy, a low-leakage-loading pattern also may tend to reduce the amount of irradiation received by the pressure vessel walls from high-energy neutron flux radially emanating from the nuclear core. This is a desirable adjunct but one which occurs in a haphazard manner insofar as a low leakage loading pattern ordinarily is designed only for the purpose of reducing fuel cycle cost, and nothing else, and therefore may or may not perchance affect a particular limited region of the pressure vessel with regard to the latter's exposure to high-energy neutron flux.

Yet it is continuous exposure of specific limited pressure vessel regions, namely, weld locations, which has been found to pose a problem insofar as eventually it results in embrittlement of the vessel welds which can cause cracking.

An ostensibly logical solution to this problem would be to replace certain ones of the peripheral fuel assemblies around the core with a shield of neutron absorbing or reflecting rods made, for example, of stainless steel (see e.g. EP-A-0 114 659). This would eliminate the fuel assemblies contributing to the irradiation of the affected pressure vessel region and place a neutron shield between the latter and the core but it also would result in an objectionable reduction in core power rating, that is, in the power output obtainable from the core.

Another seemingly logical solution would be to place shielding between the core and the pressure vessel without replacing any peripheral fuel assemblies. However, space restrictions as well as the necessity of extensive mechanical redesign and neutronic evaluation of the region outboard of the core make this approach a costly and time-consuming one to follow.

Of course, one could reduce fast-neutron flux at the core periphery also by reducing the power output of the peripheral fuel assemblies, and make up for the consequential power loss in the peripheral core region by providing for a commensurate increase in inboard region power output. This, however, would create unacceptable component thermal margins and adversely affect loss of coolant analysis margins; hence it is not a viable solution.

Therefore, it is the principal object of the invention to provide a more practicable way of alleviating the aforesaid problem of weld exposure to high-energy neutron flux.

The invention accordingly resides in a nuclear reactor as defined in claim 1, and as further characterized in the subclaims.

Since the neutron-flux reducing means in this arrangement are positioned within a core region comprising part of the array of peripheral fuel assemblies of the core and thus are incorporated in, rather than being used instead of, said part of the fuel assemblies, they do not materially affect the core rating, power output, reactor shutdown margins, core thermal margins or fuel cycle cost. The neutron-flux reducing means are rods, comprising rods of the neutron absorbing type and/or rods of the neutron reflecting type, which are disposed in reactor-coolant flow passages in said core region and, preferably, are disposed in unused control-rod guide thimbles.

A preferred embodiment of the invention will now be described, by way of example only, with reference to the accompanying drawings, in which:

Figure 1 is an elevational view of a typical nuclear reactor shown partially in cross-section and to which the invention may be applied;

Figure 2 is an enlarged, cross-sectional view of a portion of the core, the core periphery and the pressure vessel of the reactor of Figure 1 as taken along line 2—2 of Figure 1; and,

Figure 3 is an isometric and partly fractional view of a fuel assembly portion forming part of a core region having neutron-flux reducing rods incorporated therein.

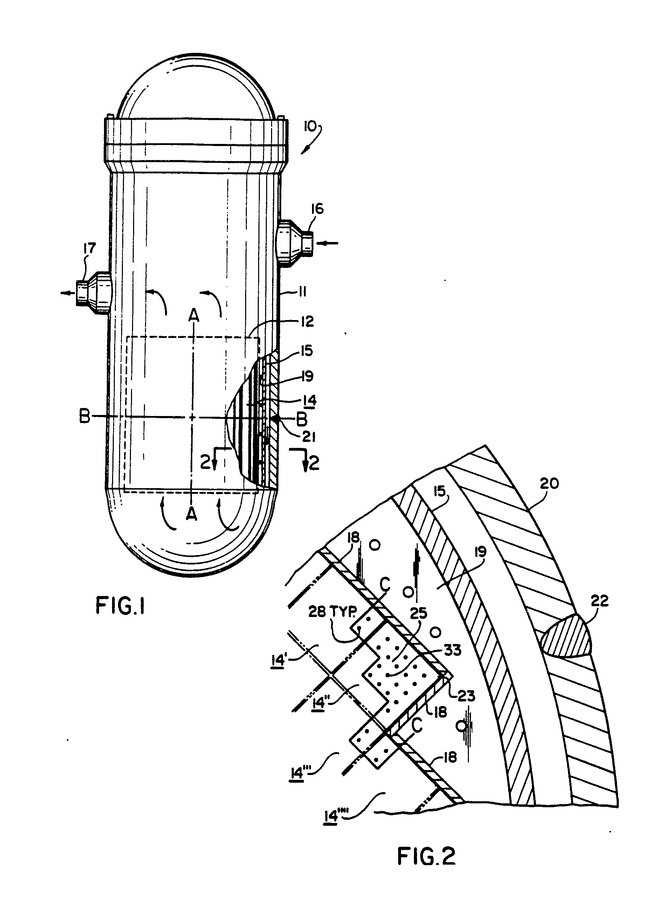

Referring now to the drawings where similar features are designated by the same reference numerals in the various figures, the nuclear reactor 10 illustrated in Figure 1 is of the pressurized light water type, although it should be understood that the invention is not limited in its applicability to this particular type of reactor.

The reactor 10 has a pressure vessel 11 which houses a nuclear core 12 supported therein by means of structural components often referred to as the reactor internals (not completely shown). The nuclear core typically comprises a plurality of fuel assemblies 14 which are substantially square in cross-section and disposed side-by-side such as to lend the nuclear core 12 an overall cross-sectional shape resembling a right circular cylinder having an irregular or stepped periphery, as partially seen from Figure 2.

The reactor internals include a core barrel 15 which separates the flow path of reactor coolant entering the pressure vessel 11 (through nozzle 16) from the flow path of reactor coolant exiting the pressure vessel 11 (through nozzle 17). Thus, reactor coolant entering the vessel will be directed downward along the outside of core barrel 15, and then will turn 180° and flow upward through the nuclear core 12 eventually to exit through the nozzle 17. The reactor internals also serve to make the transition from the irregular shape of the core periphery to the circular shape of the core barrel 15. Typically, vertical stainless-steel plates 18 are positioned against the irregular core periphery, the vertical plates being supported by a plurality of horizontally positioned former plates 19 bolted both to the vertical plates 18 and to the core barrel 15. The spaces between the horizontal former plates 19 are filled with part of the reactor coolant flowing through the nuclear core 12 but which part of the coolant bypasses the core wherefore the mass flow rate of such bypass flow, as determined by the flow cross-section of flow holes or passages provided in the former plates 19, should be kept at a minimum value yet sufficient to assure adequate cooling of the former plates 19, the vertical plates 18, and the core barrel 15.

The pressure vessel 11 is typically made from steel plates 20 which are welded together in the axial and/or circumferential directions as indicated in Figure 1 by the axes A—A and B—B, respectively, each of which represents the centerline of a weld. It is to be understood that the locations of such welds relative to the nuclear core are not necessarily always the same in all reactors, but, once a reactor is fitted with a nuclear core, the location of the pressure vessel welds is fixed relative to that particular core and any other core later loaded into the same pressure vessel throughout the lifetime of that reactor. Viewed differently, for any given reactor, the orientation of the irregular core periphery is fixed relative to the welds (A—A or B—B) joining the plates making up the pressure vessel. In the example shown in the drawings, horizontal weld 21 is located approximately at core midplane, and vertical weld 22 is located opposite the corner 23 of fuel assembly 14''. Thus, in the particular embodiment illustrated, the welds 21 and 22 are exposed to the most severe fast neutron flux condition. In actual practice, this of course may differ from case to case, thus making it necessary to determine the location of the actual welds of a pressure vessel relative to the core location and orientation and relative to the power and fast-neutron flux distribution (horizontal and vertical) output by a particular core.

Still referring to Figure 2, the irregular line C—C and the plates 18 subtending it circumscribe an arbitrary region 25 of the core 12 which, for the purpose of providing an example used in explaining the invention, is assumed to materially contribute to the fast-neutron flux affecting the weld 22. As can be seen, the region 25 encompasses parts of the fuel assemblies 14', 14'', 14''', and 14''''. The actual contribution to the fast-neutron flux from each fuel rod in the peripheral core region and the number of displacer rods and/or amount of nuclear poisoning needed to reduce the fast flux at the welds of the pressure vessel 11 to an acceptable level would be calculated. For the purpose of this description, suffice it to assume that the core peripheral region 25 defined by line C—C needs to be provided with displacer rods and/or poison material and/or neutron reflective material. The displacer rods which may comprise solid or sealed hollow tubes fit within openings within the fuel assemblies which contain a neutron moderator, such as light water. By displacing moderator within the area 25, less moderating of fast neutrons (produced by the fissioning of the nuclear fuel) occurs so that there is less fissioning and, therefore, a generation of fewer fast neutrons to which the weld 22 is exposed. If nuclear poison rods are used, they will have the beneficial effect of displacer rods and, in addition, will absorb slow or moderated neutrons which otherwise would be available for fissioning, thus further reducing the production of fast neutrons which could be absorbed by the weld 22; moreover, the nuclear poison would absorb some of the fast neutrons to which the weld 22 would be otherwise exposed. If reflector rods are used, they will provide the beneficial effect of the displacer rod and, in addition, will reflect some neutrons back into the core and away from the weld 22.

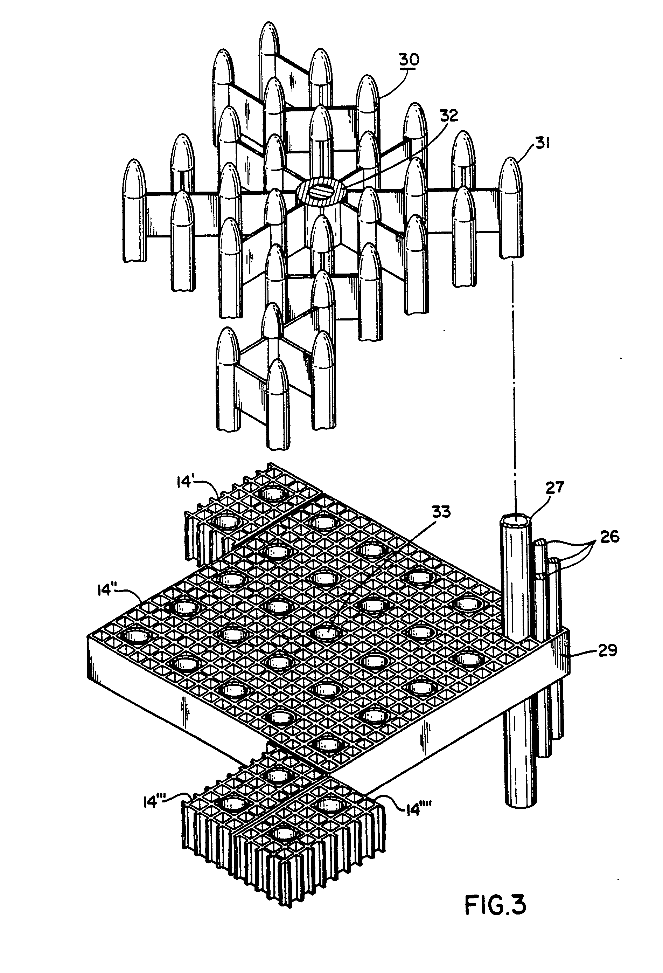

Figure 3 illustrates, in the lower portion thereof, a partial cross-section of the portion of the core 12 corresponding to the region 25, as taken across the grids 29 of the fuel assemblies 14', 14'', 14''' and 14''''. As well known in the art, grids, such as grids 29, typically are positioned at various locations along the length of fuel assembly 14 and serve to support fuel rods 26 and control-rod guide thimbles 27 in parallel spaced relationship with respect to each other so as to allow the reactor coolant to flow through the spaces in heat transfer relationship with fuel rods 26.

Guide thimbles, such as the thimbles 27, serve to guide the movement of control rods inserted therein and axially movable to control the power output of the nuclear reactor 10, as well known in the art. Typically, control rods comprise hollow tubes sealed at both ends and containing pellets of a neutron-absorbing material stacked end-on- end. Since a given fuel assembly 14 may be placed anywhere within the core 12, it is common practice to equip each fuel assembly 14 with the same number of guide thimbles or tubes 27 and to position them at the same location within the fuel assembly. Thus, and although control rod assemblies typically are not located at the core periphery, the fuel assemblies 14 at the core periphery are equipped with guide tubes 27; these, however, are not ordinarily used. Usually, each grid 29 of each fuel assembly 14 is provided with a center opening 33 for an instrumentation tube. The dots 28 within the core region 25 shown in Figure 2 represent the location of unused guide tubes 27 in the respective fuel assemblies.

Referring again to Figure 3, it shows, in the upper portion thereof, a displacer/absorber/reflector rod assembly 30 comprising a plurality of displacer/absorber/reflector rods 31 arranged parallel to each other and supported from a hub 32. The arrangement of the displacer/absorber/reflector rods 31 on the assembly 30 coincides with the location of unused guide tubes 27 in the core region 25 such that each rod 31 is received in one guide tube 27. The rods 31 may comprise displacer rods each in the form of a sealed tube of zirconia or stainless steel, for example. Or the rods 31 may comprise displacer/reflector rods in the form of solid rods made of a suitable neutron-reflecting material, such as stainless steel, or in the form sealed tubes filled with a suitable neutron reflecting material, such as zirconium. Or the rods 31 may comprise displacer absorber rods made as conventional control rods of the absorber type and using the same materials, e.g. boron carbide, cadmium-indium-silver, hafnium, or the like. Or the rods 31 may comprise a combination of such displacer rods containing absorbing material and reflecting material appropriately positioned along the length of each rod 31. Such absorbing and/or reflecting materials may extend for the full length of the rods 31. Or each rod 31 may comprise a portion of reflector and/or absorber material appropriately located between preselected axial core positions, with the remainder of the rod 31 left substantially nonabsorbing and/or nonreflecting. The rods 31 may have any desired length, and the rod assembly 30 may have any desired makeup, as required to minimize the exposure of a given weld to fast-neutron flux. Also, a given core region, just as region 25, may be provided with one or more rod assemblies 30, depending upon the number of rod assemblies necessary to achieve minimization of said exposure.

The displacer/absorber/reflector rod assembly 30 may be positioned within its designed region 25 during core loadings or reloadings and simply left there during subsequent reactor operation. The rod assembly 30 may be conventionally sandwiched between the core upper and lower support plates (not shown) so as to retain the same in its assembled position during reactor operation.

In carrying out the invention, the following procedure may be used. The relationship of the core 12 relative to the horizontal B—B and/or vertical A—A welds on the pressure vessel 11 is documented. The fast neutron flux (e.g. flux exceeding one million electron volts) at the location of the welds is calculated and/or measured. Using whatever criteria it is desired to employ in reducing the value of fast-neutron flux, a determination is made as to the size and location of the core peripheral area to be provided with one or more rod assemblies 30, and as to whether neutron reflection and/or absorption is required in addition to the displacer rod effect and over what length and at what axial location. Based upon the results of said determinations, precisely tailored rod assemblies are fabricated and loaded into position at the desired core location or locations. The reactor is thereafter normally operated at rated power. Measurements may be made during reactor operation to verify the design and displacement of the displacer/absorber/reflector rods, and if any changes seem warranted, they may be carried out in accordance with the procedure described above.

## Claims

1. A nuclear reactor comprising a pressure vessel (11) formed of wall members (20) joined together by at least one weld (21 and/or 22), a nuclear core (12) disposed within the pressure vessel and comprising a plurality of fuel assemblies (14) including fuel rods, and neutron absorbing and/or reflecting rods (31) disposed within said core at the periphery thereof for reducing neutron flux toward said vessel, characterized in that said neutron absorbing and/or reflecting rods (31) are present only in a localized core region (25) opposite said or each weld (21 or 22).

2. A nuclear reactor according to claim 1, characterized in that said neutron-flux reducing means (31) are rods inserted in reactor-coolant flow passages formed within said core region (25).

3. A nuclear reactor according to claim 2, wherein said core region includes unused control-rod guide thimbles, characterized in that said rods (31) are inserted in said unused control-rod guide thimbles (27).

## Patentansprüche

1. Kernreaktor mit einem aus durch mindestens eine Schweiß naht (21 und/oder 22) verbundenen Wandabschnitten (20) bestehenden Druckbehälter (11), einem innerhalb dieses Druckbehälters angeordnetem Reaktorkern (12) mit einer Mehrzahl von Brennelementen (14) mit Brennstäben, und am Umfang des Reaktorkerns angordneten neutronenabsorbierenden und/oder reflektierenden Stäben (31) zur Reduzierung des Neutronenflusses auf den Druckbehälter, dadurch gekennzeichnet, daß die neutronenabsorbierenden und/oder reflektierenden Stäbe (31) nur in einem gegenüber der bzw. jeder Schweißnaht (21 bzw. 22) liegendem beschränkten Kernreaktorbereich (25) vorhanden sind.

2. Kernreaktor nach Anspruch 1, dadurch gekennzeichnet, daß die Mittel (31) zur Reduzierung des Neutronenflusses Stäbe sind, welche in die innerhalb des Kernreaktorbereichs (25) gebildeten Reaktor-Kühlmittel-Strömungswege eingeführt sind.

3. Kernreaktor nach Anspruch 2, bei welchem in dem Kernreaktorbereich als solche nicht benutzte Steuerstab-Führungsrohre vorgesehen sind, dadurch gekennzeichnet, daß die Stäbe (31) in die als solche nicht benutzten Steuerstab-Führungsrohre (27) eingeführt sind.

## Revendications

1. Réacteur nucléaire comprenant une enceinte (11) sous pression constituée par les éléments (20) de paroi assemblés entre eux au moyen d'une soudure au moins (21 et/ou 22), un coeur nucléaire (12) disposé à l'intérieur de l'enceinte sous pression et comportant une pluralité d'assemblages (14) de combustible comprenant des tiges de combustible et des tiges (31) d'absorption et/ou de réflexion de neutrons disposées dans ledit coeur à la périphérie de celui-ci en vue de réduire le flux de neutrons en direction dudit récipient, caractérisé en ce que lesdites tiges (31) d'absorption et/ou de réflexion de neutrons sont présentes seulement dans une zone précise (25) du coeur, située en face de ladite soudure, ou de chacune desdites soudures (21 ou 22).

2. Réacteur nucléaire selon la revendication 1, caractérisé en ce que lesdits moyens (31) de réduction du flux de neutrons sont des tiges insérées dans les passages d'écoulement du fluide de refroidissement du réacteur, réalisés à l'intérieur de ladite zone (25) du coeur.

3. Réacteur nucléaire selon la revendication 2, dans lequel ladite zone du coeur comporte des chaussettes de guidage de tiges de commande inutilisées, caractérisé en ce que lesdites tiges (31) sont insérées dans lesdites chaussettes (27) de tiges de commande inutilisées.

FIG.1

FIG.2

FIG.3